# EUROPÄISCHE PATENTSCHRIFT

(11) **EP 4 140 784 B1**
(45) Veröffentlichungstag und Bekanntmachung des Hinweises auf die Patenterteilung: **12.03.2025**
(21) Anmeldenummer: 22184257.8
(22) Anmeldetag: 12.07.2022
(51) Int. Cl.: B60C 23/06, G01G 19/08, G01G 19/12

(54) **VERFAHREN UND VORRICHTUNG ZUR BESTIMMUNG EINER REIFENCHARAKTERISTISCHEN EINFLUSSGRÖSSE**
METHOD AND DEVICE FOR DETERMINING AN INPUT VARIABLE CHARACTERISTIC OF A TYRE
PROCÉDÉ ET DISPOSITIF DE DÉTERMINATION D'UNE GRANDEUR D'INFLUENCE CARACTÉRISTIQUE DU PNEU

(30) Priorität: 31.08.2021 DE 102021209571
(43) Veröffentlichungstag der Anmeldung: 01.03.2023
(73) Patentinhaber: Continental Reifen Deutschland GmbH, 30175 Hannover (DE)
(72) Erfinder: Dr. Sahlmüller, Baldo, 30165 Hannover (DE); James, Akhil, 30165 Hannover (DE); Dr. Lehmann, Joerg, 30165 Hannover (DE); von Janta Lipinski, Lukas, 30165 Hannover (DE)
(74) Vertreter: Continental Corporation

(56) Entgegenhaltungen:
- DE-A1- 102015 216 210
- US-A1- 2006 006 991
- US-A1- 2007 095 446
- US-A1- 2018 023 998

## Beschreibung

Die Erfindung betrifft ein Verfahren und eine Vorrichtung zur Bestimmung der Lasthistorie eines Reifens, bei welchem an dem Reifen anliegende Lastwerte ermittelt werden, insbesondere von einem am Reifen befestigbaren Sensor.

Aus der US 2007/095446 A1 ist es bekannt, mittels an einem Reifen befestigten Sensoren reifencharakteristische Einflussgrößen, wie beispielsweise den Luftdruck im Reifen oder die Reifentemperatur zu bestimmen und über ein Funksignal an ein Steuergerät zu übermitteln. Ebenso können entsprechende Sensoren auch die Kilometerlaufleistung sowie die Profiltiefe von Reifen messen, wobei die einzelnen Messdaten auch auf dem Sensor gespeichert werden können, um sie zu einem beliebigen Zeitpunkt auslesen zu können, wie es beispielsweise in der US 2006/006991 A1 beschrieben ist.

Weiterhin ist bekannt, dass die auf den Fahrzeugreifen wirkenden Lastwerte, insbesondere die Radlast und Profiltiefe zusammen mit der Reifentemperatur einen erheblichen Einfluss auf die Haltbarkeit des Reifens hat, was üblicherweise mit dem Stichwort "Endurance" bezeichnet wird. Allerdings können diese reifencharakteristischen Einflussgrößen, insbesondere die Radlast und/oder Profiltiefe bislang nicht mit vertretbarem Aufwand unmittelbar über entsprechende Sensoren gemessen und in die Überwachung der Endurance einbezogen werden.

Aus der WO 2017/032466A1 und der DE 10 2015 216 210 A1 ist ein Verfahren sowie ein Sensor mit zugehörigem Steuergerät bekannt, welche die Radlast und die Profiltiefe über eine mathematische Abbildung aus dem Verlauf der Radialbeschleunigung des Reifens am Innerliner ermitteln.

Die US 2018/0023998 A1 offenbart eine Vorrichtung und ein Verfahren zur Aufzeichnung einer Lasthistorie eines Fahrzeuges, bei welchem Lastbereiche mit zugehörigen Zählern definiert sind, das Gesamtgewicht des Fahrzeuges zu verschiedenen Zeitpunkten ermittelt wird, das gemessene Gesamtgewicht dem entsprechenden Lastbereich zugeordnet und dessen Zähler erhöht wird. Auf diese Weise kann ermittelt werden, ob das Fahrzeug überladen worden ist, um Garantieansprüche bei Beschädigungen des Antriebsstranges zu evaluieren. Eine Bestimmung der Lasthistorie eines einzelnen Reifens ist mit der bekannten Vorrichtung und dem Verfahren nicht möglich oder vorgesehen.

Nachteilig bei den bisher bekannten Verfahren und Sensoren ist es, dass über die Betriebs- bzw. Lebensdauer des Reifens keine Lasthistorie erstellt oder zugänglich gemacht werden kann, die zur Beurteilung der Endurance herangezogen werden könnte.

Aufgabe der Erfindung ist es daher, ein Verfahren sowie eine Vorrichtung der eingangs genannten Art vorzuschlagen, die die genannten Nachteile des Standes der Technik überwinden.

Zur Lösung der gestellten Aufgabe wird erfindungsgemäß die Ausgestaltung eines Verfahrens gemäß den Merkmalen des Patentanspruches 1 vorgeschlagen.

Eine erfindungsgemäße Vorrichtung zur Lösung der gestellten Aufgabe ist Gegenstand des Patentanspruches 8.

Vorteilhafte Ausgestaltungen und Weiterbildungen der Erfindung sind Gegenstand der abhängigen Ansprüche.

Das erfindungsgemäße Verfahren sieht vor, dass Lastbereiche einer vorbestimmten Bereichsbreite definiert werden und zu jedem Lastbereich ein Zähler bereitgestellt wird. Die Lastwerte werden sodann mittels geeigneter Sensoren am Reifen in einer fortlaufenden Serie in vorbestimmten Zeitintervallen ermittelt und den Lastbereichen zugeordnet, wobei bei jeder Zuordnung eine Erhöhung des zugehörigen Zählers erfolgt und die Zähler bzw. deren Zählerstände gespeichert und als Lasthistorie bereitgestellt und bedarfsweise ausgelesen werden.

Somit ist es erfindungsgemäß möglich, in einem am Reifen befestigten Sensor jeweils in vorbestimmten Zeitabständen die anliegenden Lastwerte zu ermitteln, die jedoch für die Erstellung einer Lasthistorie und zur Reduktion des Datenvolumens nicht unmittelbar gespeichert werden, sondern vorbestimmten Lastbereichen zugeordnet werden und zu einer Erhöhung des zugeordneten Zählers führen.

Erfindungsgemäß wird somit für definierte Lastbereiche bzw. Bereiche der korrelierten Variablen ein entsprechender digitaler Zähler vorgehalten, der um eine entsprechende Schrittweite hoch gezählt wird, um über einen bestimmten Zeitraum oder auch über die gesamte Lebensdauer des Reifens dessen Lasthistorie durch Aufsummieren der Zählerstände zu erzeugen.

Die definierten Lastbereiche werden vor Inbetriebnahme des Reifens anhand der zu erwartenden Betriebsbedingungen jeweils anhand der korrelierten, vom verwendeten Sensor ermittelten Variablen definiert, beispielsweise indem als Lastwerte Radlasten ermittelt oder berechnet werden und bei Pkw-Reifen eine Bereichsbreite von 100 kg und bei Lkw-Reifen eine Bereichsbreite von 500 kg vorgesehen wird. Durch Aneinanderreihung einer Vielzahl solcher aufeinander aufbauender Lastbereiche mit einer beispielhaften Bereichsbreite von 100 kg lässt sich insoweit das gesamte zu erwartende Spektrum an Lastwerten abdecken und mit entsprechenden Zählern pro Lastbereich auswerten. Entsprechendes gilt auch für andere ermittelte Lastwerte oder Sensorvariablen anstelle der Radlast.

Idealerweise werden die Bereichsbreiten möglichst feinteilig unterteilt und der gesamte von allen Lastbereichen abgedeckte Bereich möglichst breit bemessen, wobei die tatsächliche Bereichsbreite abhängig vom zur Verfügung stehenden Speicher gewählt wird.

Nach einem Vorschlag der Erfindung wird zusätzlich zu den anhand der erwarteten Betriebsbedingungen definierten Lastbereichen ein unterer und ein oberer Grenzwert für den Lastwert definiert, die minimal und maximal erwartet werden und zwischen diesen beiden Grenzwerten werden die Lastbereiche mit ihren zugeordneten Zählern definiert. Je ein weiterer Zähler wird für ermittelte Lastwerte unterhalb des unteren Grenzwertes und für ermittelte Lastwerte oberhalb des oberen Grenzwertes bereitgestellt. Als unterer Grenzwert kann bei Ermittlung von Radlasten als Lastwert beispielsweise das Leergewicht des Fahrzeugs und als oberer Grenzwert das Maximalgewicht des Fahrzeuges herangezogen werden, an dem der Reifen montiert wird. Im Ergebnis erhält man durch Auswertung sämtlicher Zähler ein Lasthistogramm mit einem Underflow- und einem Overflow-Bereich.

Nach einem weiteren Vorschlag der Erfindung können die Lastwerte insbesondere durch Ermittlung der Radialbeschleunigung des Reifens ermittelt werden, beispielsweise durch eine Analyse des sogenannten Latschdurchlaufs, wie es im Prinzip aus der WO 2017/032466A1 bekannt ist, deren Offenbarung insoweit hier in Bezug genommen wird, wodurch auf die anliegende Radlast und/oder die Profiltiefe geschlossen werden kann.

Die Zeitintervalle, in denen die Lastwerte als fortlaufende Serie ermittelt und den Lastbereichen unter Erhöhung des zugehörigen Zählers zugeordnet werden, können nach einem weiteren Vorschlag der Erfindung gleich groß oder auch unterschiedlich groß ausgewählt werden. Sofern die Zeitintervalle gleich groß ausgebildet sind, wird bei Zuordnung eines Lastwertes zu einem bestimmten Lastbereich der zugehörige Zähler vorzugsweise um den Wert 1 erhöht. Sofern die Zeitintervalle ungleich groß ausgebildet sind, wird der Zähler um einen Wert, der die Größe des Zeitintervalls repräsentiert, erhöht, beispielsweise um die Länge des Zeitintervalls in Sekunden oder Minuten.

Die einzelnen Zähler bzw. deren Zählerstände werden gespeichert und können bedarfsweise als Lasthistorie ausgelesen werden, wozu nach einem weiteren Vorschlag der Erfindung vorzugsweise eine drahtlose Schnittstelle, beispielsweise eine Bluetooth-Verbindung vorgesehen sein kann, die den Zähler drahtlos mit einem entsprechenden Lesegerät koppelt, um die Zählerstände auszulesen.

Neben der Erstellung eines eindimensionalen Lasthistogramms über die Zeit kann im Rahmen der Erfindung auch die Erstellung eines mehrdimensionalen Lasthistogramms vorgesehen sein. Dazu können nach einem weiteren Vorschlag der Erfindung neben dem Lastwert auch die Temperatur und/oder die Anzahl der Umdrehungen des Reifens und damit die zurückgelegte Strecke ermittelt und gemeinsam mit den Zählern gespeichert und als Lasthistorie bereitgestellt werden. Beispielsweise kann durch zusätzliche Messung der Reifentemperatur ein zweidimensionales Last-Temperatur-Histogramm des Reifens bereitgestellt und bedarfsweise ausgelesen werden.

Die Anzahl der Umdrehungen und damit die zurückgelegte Strecke des Reifens kann nicht nur unmittelbar gespeichert werden, sondern kann auch als Vorgabe für die Erhöhung der Zählerstände der jeweiligen zugeordneten Lastwerte zu Lastbereichen herangezogen werden, sodass bei Zuordnung eines Lastwertes zu einem Lastbereich der zugeordnete Zähler nicht um den Wert 1 erhöht wird, sondern um die zum Beispiel aus der Anzahl der Umdrehungen ermittelte zurückgelegte Strecke. Vereinfacht kann diese Strecke auch über die gleichzeitig mit der Last und ggf. der Temperatur gemessene Radialbeschleunigung bzw. die Wurzel aus dieser Radialbeschleunigung ersetzt werden.

Die im Rahmen der Erfindung vorgeschlagene Vorrichtung zur Bestimmung einer reifencharakteristischen Einflussgröße umfasst einen am Reifen, vorzugsweise an dessen Innerliner befestigbaren Sensor zur Ermittlung von am Reifen anliegenden Lastwerten und zeichnet sich dadurch aus, dass der Sensor eine Auswerteeinheit umfasst, die ermittelte Lastwerte definierbaren Lastbereichen zuordnet und den Lastbereichen zugeordnete Zähler umfasst, mittels derer jede Zuordnung eines Lastwertes zu einem Lastbereich zählbar und speicherbar ist und als Lasthistorie des Reifens bedarfsweise ausgebbar ist.

Der Sensor kann insbesondere zur Ermittlung der radialen Beschleunigung des Reifens im sogenannten Latschdurchgang ausgebildet sein, um aus den Meßwerten im Wege einer mathematischen Berechnung die anliegende Radlast und die Profiltiefe des Reifens als Lastwert zu ermitteln, wie es z.B. in der WO 2017/032466 beschrieben ist.

Zum bedarfsweise Auslesen der Lasthistorie umfasst der Sensor vorteilhaft eine Funkschnittstelle, beispielsweise eine Bluetooth-Schnittstelle.

Ein solcher Sensor kann in an sich bekannter Weise als Reifensensor in den Reifen, vorzugsweise am Innerliner eingeklebt oder an diesem befestigt werden, um die gewünschten Lastwerte zu ermitteln. Zusätzlich umfasst der Sensor die Auswerteeinheit und die den jeweils definierbaren Lastbereichen zugeordneten Zähler. Darüber hinaus kann ein solcher Sensor auch erweiterte Funktionalität aufweisen, in dem er beispielsweise auch die Reifentemperatur messen und im Rahmen der bereitgestellten Lasthistorie speichern kann und/oder auch die Anzahl der Umdrehungen des Reifens ermitteln kann, um die Gesamtlaufleistung des Reifens zu messen und im Rahmen der bereitgestellten Lasthistorie zu berücksichtigen.

Mit dem erfindungsgemäßen Verfahren und der Vorrichtung kann aus Lastwerten bzw. Variablen, die mit der Last stark korrelieren, eine Lasthistorie des Reifens in Echtzeit über die Lebensdauer des Reifens erstellt, bereitgestellt und jederzeit ausgelesen werden, um beispielsweise eine Reifenbeurteilung in Bezug auf die Endurance vorzunehmen. Diese Reifenbeurteilung kann sowohl während des Reifenlebens als auch am Ende des Reifenlebens vorgenommen werden, wobei am Fahrzeug selbst keine weitere Hardware erforderlich ist, um die Lasthistorie zu speichern, da diese Speicherung vollständig auf dem Sensor erfolgt.

## Patentansprüche

1. Verfahren zur Bestimmung der Lasthistorie eines Reifens, bei welchem an dem Reifen anliegende Lastwerte von einem am Reifen befestigten Sensor ermittelt werden, **dadurch gekennzeichnet, dass** Lastbereiche einer vorbestimmten Bereichsbreite definiert werden und zu jedem Lastbereich ein Zähler bereitstellt wird und die Lastwerte als fortlaufende Serie in vorbestimmten Zeitintervallen ermittelt und den Lastbereichen unter Erhöhung des zugehörigen Zählers zugeordnet werden, wobei die Zähler gespeichert und als Lasthistorie bereitgestellt und bedarfsweise ausgelesen werden.

2. Verfahren nach Anspruch 1, **dadurch gekennzeichnet, dass** ein unterer und ein oberer Grenzwert für den Lastwert definiert werden, zwischen denen die Lastbereiche definiert werden und je ein weiterer Zähler für ermittelte Lastwerte unterhalb des unteren Grenzwertes und für ermittelte Lastwerte oberhalb des oberen Grenzwertes bereitgestellt werden.

3. Verfahren nach einem der Ansprüche 1 oder 2, **dadurch gekennzeichnet, dass** die Lastwerte durch Ermittlung der Radialbeschleunigung des Reifens ermittelt werden.

4. Verfahren nach einem der Ansprüche 1 bis 3, **dadurch gekennzeichnet, dass** die Zeitintervalle gleich oder verschieden groß ausgewählt werden.

5. Verfahren nach Anspruch 4, **dadurch gekennzeichnet, dass** bei Zuordnung eines Lastwertes zu einem Lastbereich der zugehörige Zähler bei gleich großen Zeitintervallen um den Wert 1 und bei unterschiedlich großen Zeitintervallen um einen das Zeitintervall repräsentierenden Wert erhöht wird.

6. Verfahren nach einem der Ansprüche 1 bis 5, **dadurch gekennzeichnet, dass** die Zähler drahtlos ausgelesen werden.

7. Verfahren nach einem der Ansprüche 1 bis 6, **dadurch gekennzeichnet, dass** die Temperatur und/oder die Umdrehungen des Reifens ermittelt und gemeinsam mit den Zählern gespeichert werden.

8. Vorrichtung zur Bestimmung der Lasthistorie eines Reifens, umfassend einen am Reifen befestigbaren Sensor zur Ermittlung von am Reifen anliegenden Lastwerten, **dadurch gekennzeichnet, dass** der Sensor eine Auswerteeinheit umfasst, die ermittelte Lastwerte definierbaren Lastbereichen zuordnet und den Lastbereichen zugeordnete Zähler umfasst, mittels derer jede Zuordnung eines Lastwertes zu einem Lastbereich zählbar und speicherbar ist und als Lasthistorie des Reifens bedarfsweise ausgebbar ist.

9. Vorrichtung nach Anspruch 8, **dadurch gekennzeichnet, dass** der Sensor zur Ermittlung der radialen Beschleunigung des Reifens ausgebildet ist.

10. Vorrichtung nach Anspruch 8 oder 9, **dadurch gekennzeichnet, dass** der Sensor eine Funkschnittstelle zur Ausgabe der Lasthistorie umfasst.

11. Vorrichtung nach einem der Ansprüche 8 bis 10, **dadurch gekennzeichnet, dass** der Sensor die Temperatur und/oder die Umdrehungen des Reifens erfasst und die vom Sensor ermittelten Werte gemeinsam mit den Zählern speicherbar sind.

## Claims

1. Method for determining the load history of a tyre, in which load values applied to the tyre are determined by a sensor attached to the tyre, **characterized in that** load ranges of a predetermined range width are defined and a counter is provided for each load range and the load values are determined as a continuous series at predetermined time intervals and are assigned to the load ranges while incrementing the associated counter, wherein the counters are stored and provided as a load history and read out as required.

2. Method according to Claim 1, **characterized in that** a lower and an upper limit value are defined for the load value, between which the load ranges are defined, and a further counter for determined load values below the lower limit value and a further counter for determined load values above the upper limit value are provided.

3. Method according to either of Claims 1 and 2, **characterized in that** the load values are determined by determining the radial acceleration of the tyre.

4. Method according to one of Claims 1 to 3, **characterized in that** the time intervals are selected to be the same or different.

5. Method according to Claim 4, **characterized in that**, when a load value is assigned to a load range, the associated counter is incremented by the value 1 if the time intervals are the same and is incremented by a value representing the time interval if the time intervals are different.

6. Method according to one of Claims 1 to 5, **characterized in that** the counters are read out wirelessly.

7. Method according to one of Claims 1 to 6, **characterized in that** the temperature and/or the revolutions of the tyre is/are determined and stored together with the counters.

8. Apparatus for determining the load history of a tyre, comprising a sensor that can be attached to the tyre and is intended to determine load values applied to the tyre, **characterized in that** the sensor comprises an evaluation unit that assigns determined load values to definable load ranges and comprises counters which are assigned to the load ranges and by means of which each assignment of a load value to a load range can be counted and stored and can be output as a load history of the tyre as required.

9. Apparatus according to Claim 8, **characterized in that** the sensor is designed to determine the radial acceleration of the tyre.

10. Apparatus according to Claim 8 or 9, **characterized in that** the sensor comprises a radio interface for outputting the load history.

11. Apparatus according to one of Claims 8 to 10, **characterized in that** the sensor captures the temperature and/or the revolutions of the tyre and the values determined by the sensor can be stored together with the counters.

## Revendications

1. Procédé permettant de déterminer l'historique de charge d'un pneu, dans lequel des valeurs de charge appliquées au pneu sont établies par un capteur fixé au pneu, **caractérisé en ce que** des zones de charge d'une largeur de zone prédéterminée sont définies, et un compteur est fourni pour chaque zone de charge, et les valeurs de charge sont établies comme une série continue à des intervalles de temps prédéterminés et sont associées aux zones de charge en incrémentant le compteur associé, dans lequel les compteurs sont stockés et fournis sous forme d'historique de charge et sont relevés en cas de besoin.

2. Procédé selon la revendication 1, **caractérisé en ce qu'**une valeur limite inférieure et une valeur limite supérieure sont définies pour la valeur de charge, entre lesquelles les zones de charge sont définies, et respectivement un compteur supplémentaire est fourni pour des valeurs de charge établies au-dessous de la valeur limite inférieure et pour des valeurs de charge établies au-dessus de la valeur limite supérieure.

3. Procédé selon l'une quelconque des revendications 1 ou 2, **caractérisé en ce que** les valeurs de charge sont établies en établissant l'accélération radiale du pneu.

4. Procédé selon l'une quelconque des revendications 1 à 3, **caractérisé en ce que** les intervalles de temps sont sélectionnés pour être de taille identique ou différente.

5. Procédé selon la revendication 4, **caractérisé en ce que** lors de l'association d'une valeur de charge à une zone de charge, le compteur associé est incrémenté de la valeur 1 pour des intervalles de temps de taille identique et est incrémenté d'une valeur représentant l'intervalle de temps pour des intervalles de temps de taille différente.

6. Procédé selon l'une quelconque des revendications 1 à 5, **caractérisé en ce que** les compteurs sont relevés sans fil.

7. Procédé selon l'une quelconque des revendications 1 à 6, **caractérisé en ce que** la température et/ou les tours du pneu sont établis et stockés conjointement avec les compteurs.

8. Dispositif permettant de déterminer l'historique de charge d'un pneu, comprenant un capteur pouvant être fixé au pneu pour établir des valeurs de charge appliquées au pneu, **caractérisé en ce que** le capteur comprend une unité d'évaluation qui associe les valeurs de charge établies à des zones de charge définissables et comprend des compteurs associés aux zones de charge, au moyen desquels chaque association d'une valeur de charge à une zone de charge peut être comptée et stockée et peut être émise sous forme d'historique de charge du pneu en cas de besoin.

9. Dispositif selon la revendication 8, **caractérisé en ce que** le capteur est réalisé pour établir l'accélération radiale du pneu.

10. Dispositif selon la revendication 8 ou 9, **caractérisé en ce que** le capteur comprend une interface radio pour sortir l'historique de charge.

11. Dispositif selon l'une quelconque des revendications 8 à 10, **caractérisé en ce que** le capteur détecte la température et/ou les tours du pneu et que les valeurs établies par le capteur peuvent être stockées conjointement avec les compteurs.
